(19) Europäisches Patentamt
European Patent Office
Office européen des brevets

(11) **EP 3 610 247 B1**

(12) **EUROPEAN PATENT SPECIFICATION**

(45) Date of publication and mention
of the grant of the patent:
**30.08.2023 Bulletin 2023/35**

(21) Application number: **18784205.9**

(22) Date of filing: **16.04.2018**

(51) International Patent Classification (IPC):
**G01N 23/02** (2006.01)    **G01N 23/083** (2018.01)
**G21K 7/00** (2006.01)    **G01N 23/041** (2018.01)

(52) Cooperative Patent Classification (CPC):
**G21K 7/00; G01N 23/041; H01J 35/08;**
G21K 2207/005

(86) International application number:
**PCT/US2018/027821**

(87) International publication number:
**WO 2018/191753 (18.10.2018 Gazette 2018/42)**

(54) **TALBOT X-RAY MICROSCOPE**

TALBOT-RÖNTGENMIKROSKOP

MICROSCOPE À RAYONS X TALBOT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.04.2017 US 201762485916 P**

(43) Date of publication of application:
**19.02.2020 Bulletin 2020/08**

(73) Proprietor: **Sigray Inc.**
**Concord, CA 94520 (US)**

(72) Inventors:
• **YUN, Wenbing**
  **Concord, CA 94520 (US)**
• **LEWIS, Sylvia, Jia Yun**
  **Concord, CA 94520 (US)**
• **KIRZ, Janos**
  **Concord, CA 94520 (US)**
• **VINE, David**
  **Concord, CA 94520 (US)**
• **SESHADRI, Srivatsan**
  **Concord, CA 94520 (US)**

(74) Representative: **Marks & Clerk LLP**
**15 Fetter Lane**
**London EC4A 1BW (GB)**

(56) References cited:
**WO-A1-2015/034791    WO-A1-2015/168473
WO-A1-2015/168473    US-A1- 2015 117 599
US-A1- 2015 260 663    US-A1- 2015 260 663**

## Description

**CROSS-REFERENCE TO RELATED APPLICATIONS**

This Patent Application claims the priority benefit of U.S. provisional patent application no. 62/485,916, titled "TALBOT X-RAY MICROSCOPE," filed April 15, 2017, and is a continuation-in-part of U.S. Patent Application 14/712,917, filed May 15, 2015 and entitled "X-RAY METHOD FOR MEASUREMENT, CHARACTERIZATION, AND ANALYSIS OF PERIODIC STRUCTURES", which in turn is a continuation-in-part of U.S. Patent Application 14/700,137, filed Apr. 29, 2015 and entitled "X-RAY INTERFEROMETRIC IMAGING SYSTEM", which in turn is a continuation-in-part of U.S. Patent Application 14/527,523 (now expired), filed Oct. 29, 2014 and entitled "X-RAY INTERFEROMETRIC IMAGING SYSTEM", which in turn claims the benefit of U.S. Provisional Patent Application Nos. 61/898,019, filed Oct. 31, 2013 and entitled "X-ray Phase Contrast imaging System"; 61/901,361, filed on Nov. 7, 2013 and entitled "An X-ray Source Consisting of an Array of Fine Sub-Sources"; and 61/981,098, filed April 17, 2014 and entitled "Two Dimensional Phase Contrast Imaging Apparatus".

The present Application additionally claims the benefit of U.S. Provisional Patent Application Nos. 62/429,587, filed 12/2/2016 and entitled "METHOD FOR X-RAY MICROSCOPY"; and 62/429,760, filed 12/3/2016 and entitled "X-RAY MEASUREMENT TECHNIQUES USING MULTIPLE MICRO-BEAMS.

BACKGROUND

**a. Field of the Invention**

The present technology relates to interferometric systems using x-rays, and in particular, interferometric measurement, characterization and analysis systems using a system of periodic micro-beams to illuminate an object to determine various structural and chemical properties of the object.

**b. Discussion of Prior Art**

Prior art x-ray microscopes are generally limited by the resolution of the x-ray optics (e.g. zone plates) and/or the resolution of the pixel size of the detector. Although some commercial x-ray microscope systems have a resolution of less than 100 nm, such systems have an extremely limited field of view, and high resolution x-ray microscopy with a large field of view has difficulty producing images with a resolution smaller than 1 micron.

Talbot systems of the prior art have traditionally been used for low resolution imaging. What is needed is a microscopy system that utilizes Talbot interference fringes for high resolution imaging at improved throughput.

US2015/117599 A1 discloses an x-ray interferometric imaging system in which the x-ray source comprises a target having a plurality of structured coherent sub-sources of x-rays embedded in a thermally conducting substrate. The system additionally comprises a beam-splitting grating that establishes a Talbot interference pattern, which may be a π phase-shifting grating, and an x-ray detector to convert two-dimensional x-ray intensities into electronic signals. The system may also comprise a second analyzer grating that may be placed in front of the detector to form additional interference fringes, and a means to translate the second grating relative to the detector. The structures can be microstructures with lateral dimensions measured on the order of microns, and with a thickness on the order of one half of the electron penetration depth within the substrate. The structures can be formed within a regular array.

WO2015/168473 A1 discloses an x-ray interferometric imaging system in which the x-ray source comprises a target having a plurality of structured coherent sub-sources of x-rays embedded in a thermally conducting substrate. The system additionally comprises a beam-splitting grating that establishes a Talbot interference pattern, which may be a phase-shifting grating, and an x-ray detector to convert two-dimensional x-ray intensities into electronic signals. The system may also comprise a second analyzer grating that may be placed in front of the detector to form additional interference fringes, a means to translate the second grating relative to the detector. The system may additionally comprise an anti scattering grid to reduce signals from scattered x-rays.

US2015/260663 A1 discloses interferometric systems using x-rays, and in particular, interferometric measurement, characterization and analysis systems for observing period structures. The system uses high-brightness coherent sources of x-rays, which in turn may use anodes or targets comprising periodic microstructures of x-ray generating materials embedded in a thermally conducting substrate of low atomic number material.

**SUMMARY**

This present technology, roughly described, includes systems for x-ray microscopy using an array of micro-beams having a micro- or nano-scale beam intensity profile to provide selective illumination of micro- or nano-scale regions of an object. An array detector is positioned such that each pixel of the detector only detects x-rays corresponding to a single micro-beam, allowing the signal arising from the x-ray detector to be identified with the specific, limited micro- or nano-scale regions illuminated. This enables microscopy while using a higher efficiency, larger pixel detector without compromising spatial resolution.

In embodiments, the micro- or nano-scale beams are provided by producing a set of Talbot interference fringes, which creates a set of fine x-ray micro-beams corresponding to beam comprising the anti-nodes of the interference pattern.

In the embodiments, both the detector and the object are placed within the same waist or "depth-of-focus" range of a set of Talbot constructive fringes (anti-nodes). In some embodiments, the object is positioned on a mount that allows translation in the x- and y- directions perpendicular to the direction of x-ray beam propagation, allowing a "scanned" transmission image on a microscopic scale to be assembled. In some embodiments, the object is positioned on a mount that allows rotation about an axis perpendicular to the direction of x-ray beam propagation, allowing the collection of data on a microscopic scale to be used for laminographic or tomographic images reconstruction.

Additional masking layers may be inserted in the beam path to block a selected number of the micro-beams, allowing the use of detectors with larger pixel sizes for the remaining micro-beams. The use of a masking layer also allows the use of a detector with enhanced detection efficiency for the remaining micro-beams. Such masking layers may be placed in front of the object to be examined, between the object and the detector, or be designed as part of the detector structure itself.

## BRIEF DESCRIPTION OF THE DRAWINGS

FIGURE 1A illustrates a prior art example of a Talbot interference fringe pattern for a 1:1 duty cycle absorption grating.

FIGURE 1B illustrates a detail from the pattern of FIGURE 1A showing an anti-node as a "depth-of-focus" range.

FIGURE 2A illustrates a prior art example of a diverging Talbot interference fringe pattern for a 1:1 duty cycle $\pi/2$ phase shifting grating.

FIGURE 2B illustrates a prior art example of a diverging Talbot interference fringe pattern for a 1:1 duty cycle $\pi$ phase shifting grating.

FIGURE 2C illustrates a prior art example of a diverging Talbot interference fringe pattern for a 1:3 duty cycle $\pi$ phase shifting grating.

FIGURE 2D illustrates phase gratings and self images for different phase grating periods.

FIGURE 3A illustrates a schematic view of a microscope according to an embodiment of the invention.

FIGURE 3B illustrates a substrate with an embedded target mask.

FIGURE 3C illustrates an alternate substrate with an embedded target mask.

FIGURE 3D illustrates a system having source electron beams bombarding a target at an oblique angle.

FIGURE 3E illustrates a target having microstructures.

FIGURE 3F illustrates a plot of optimal thickness vs. acceleration voltage for molybdenum.

FIGURE 4A illustrates a schematic view of the micro-beams, object, and detector of the embodiment of FIGURE 3A.

FIGURE 4B illustrates a schematic cross-section view of the micro-beams, object, and detector of the embodiment of FIGURE 3A.

FIGURE 5 illustrates a schematic view of a microscope according to an embodiment of the invention having a mask placed in front of the object under examination.

FIGURE 6A illustrates a schematic view of the micro-beams, object, and detector of the embodiment of FIGURE 5.

FIGURE 6B illustrates a schematic cross-section view of the micro-beams, object, and detector of the embodiment of FIGURE 5.

FIGURE 7 illustrates a schematic cross-section view of the micro-beams, object, and detector of an embodiment comprising a scintillator.

FIGURE 8 illustrates a schematic cross-section view of the micro-beams, object, and detector of an embodiment comprising a scintillator and a scintillator imaging system.

FIGURE 9 illustrates a schematic view of a microscope according to an embodiment of the invention having a mask placed in front of the object under examination.

FIGURE 10A illustrates a schematic view of the micro-beams, object, and detector of the embodiment of FIGURE 5.

FIGURE 10B illustrates a schematic cross-section view of the micro-beams, object, and detector of the embodiment of FIGURE 5.

FIGURE 11 illustrates a schematic cross-section view of the micro-beams, object, and detector of an embodiment comprising a mask at the detector and a scintillator.

FIGURE 12 illustrates a schematic cross-section view of the micro-beams, object, and detector of an embodiment comprising a mask at the detector and a scintillator and a scintillator imaging system.

FIGURE 13 illustrates a method for collecting microscopy data.

## DETAILED DESCRIPTION OF EMBODIMENTS OF THE INVENTION

This present technology includes systems for x-ray microscopy using an array of micro-beams having a micro- or nano-scale beam intensity profile to provide selective illumination of micro- or nano-scale regions of an object. Each micro-beam is separated from other micro-beams by regions of lower x-ray intensity, ranging from 0.8X to 0X of the intensity of the micro-beam. An array detector is positioned such that each pixel of the detector only detects x-rays corresponding to a single micro-beam, allowing the signal arising from the x-ray detector to be identified with the specific, limited micro- or nano-scale regions illuminated. In the invention, the object being imaged and the detector are positioned within the same Talbot diffraction order. In the present system, the spatial resolution is decoupled from the source size and the detector pixel size.

Imaging using Talbot fringes typically involves a grating (often a phase-shifting grating) to produce the Talbot interference pattern, and then analysis of the resulting pattern with a second grating and/or an array x-ray detector.

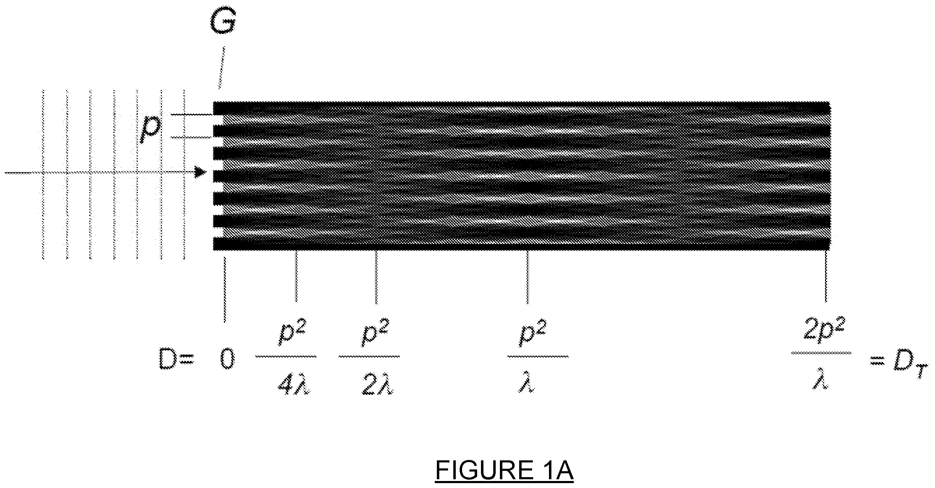

FIGURE 1A illustrates a Talbot interference fringe generated by an absorption grating G having a 50/50 duty cycle with a pitch $p$ when illuminated by a plane wave. Interference fringes are generated behind the grating, reconstructing the pitch $p$ with a 50/50 duty cycle at the Talbot distance $D_T$, given by

$$D_T = \frac{2p_1^2}{\lambda} \qquad \text{[Eqn. 1]}$$

where $p_1$ is the period of the beam splitting grating and $\lambda$ is the x-ray wavelength.

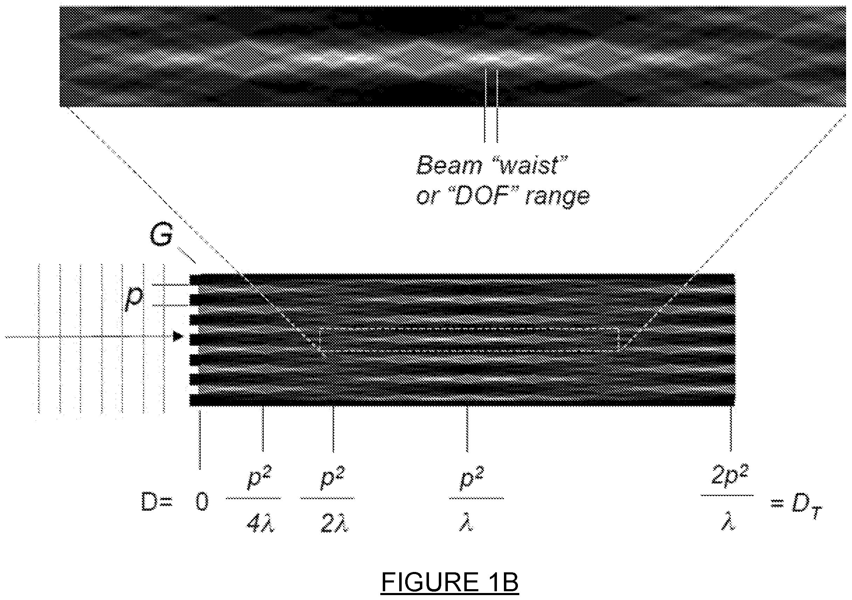

As an x-ray illuminator, the Talbot interference pattern can, with suitable selection of a beam-splitting grating, produce bright anti-nodes with corresponding micron-scale dimensions. For x-rays with an energy of 24.8 keV and an absorption grating with a 50/50 duty cycle and a 1 micron pitch, the Talbot distance is $D_T$ = 4 cm. The scales for the x- and y-directions of the fringes in the illustration of FIGURE 1 are quite different, and although the fringes may laterally (i.e. perpendicular to the direction of propagation) have a micron scale and pitch, they can have depth-of-focus on the scale of hundreds of microns to even centimeters.

Fringe patterns at various fractional Talbot distances may actually be smaller than the size of the original grating features. These anti-nodes may therefore serve as the multiple micro-beams used for illuminating an object to achieve higher resolution.

The range (depth-of-focus) over which the anti-node maintains its finest dimension is related to the pitch $p$ of the Talbot fringes by:

$$DOF \propto \frac{p^2}{2\lambda} \qquad \text{[Eqn. 2]}$$

The waist, or "depth-of-focus" equivalent for the anti-node for x-rays of, for example, 20 keV and a grating period of 1 micron is on the order of centimeters.

FIGURE 1B illustrates an enlarged portion of an anti-node of FIGURE 1A, with a portion that may be considered a DOFs of one of the anti-nodes noted. In some instances, an anti-node is a portion of the beam that differs from a node by greater than 20%.; for example, the contrast ratio between an "anti-node" and "node" can be 1.2:1. Exact definitions of a beam "waist", defined by the range over which an anti-node varies by less than a predetermined amount (e.g. a length range over which the anti-node full-width at half-maximum variation is within 5%) may be defined for various Talbot patterns. Note that a given interference pattern may have many fine "waists" that can be used for illumination, and, depending on the grating used, some may be of even finer dimensions than the grating half-pitch. These "waists" may also occur at any number of distances from the grating and need not be at the previously defined fractional Talbot distances.

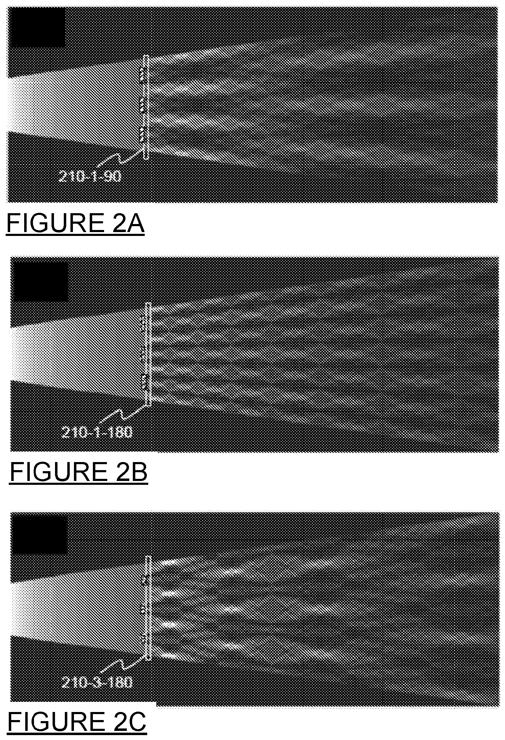

The pattern of Talbot fringes therefore resembles an array of "micro-beams" propagating in space. The fringes may be parallel micro-beams, as was illustrated in FIGURE 1, or may be obtained using converging or diverging x-ray beams. Additional examples of Talbot interference patterns are shown in FIGs. 2A - 2C.

FIGURE 2A illustrates the intensity pattern produced by a grating 210-1-90 (shown in cross section) introducing a $\pi/2$ radian phase shift from a 1:1 grating-to-space width ratio. FIGURE 2B illustrates the intensity pattern produced by a grating 210-1-180 introducing a $\pi$ radian phase shift in a 1:1 grating-to-space width ratio. FIGURE 2C illustrates the intensity pattern produced by a grating 210-3-180 introducing a $\pi$ radian phase shift in a 1:3 grating-to-space width ratio. Simulations of FIGs. 2A - 2C assume gratings with a Ronchi (e.g. line/space square wave) profile and a point radiation source with sufficient spatial coherence.

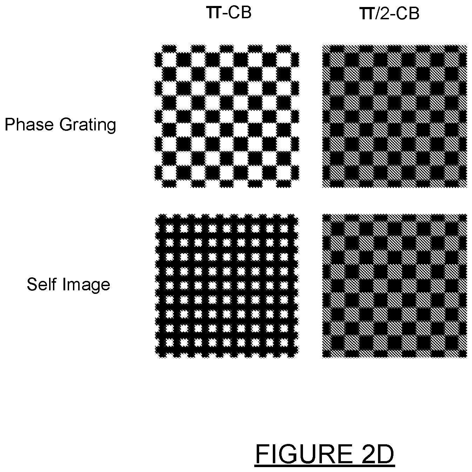

FIGURE 2D illustrates two-dimensional phase gratings and self images for phase grating periods of $\pi$ and $\pi/2$. As shown in FIGURE 2D, the $\pi$ period grating is in the form of a checkerboard and produces a "mesh" self image. A grating with $\pi/2$ period also has checkerboard form but produces a checkerboard self-image with inverted contrast. The x-ray microscope of the present technology can utilize a grating with a period of $\pi$, $\pi/2$, or other period to produce microbeams.

In many embodiments, this beam splitting diffraction grating is that of a phase grating of low absorption but producing considerable x-ray phase shift of either $\pi/2$ or $\pi$ radians, or some other specified or predetermined value such as a fraction of or multiple of $\pi$ or $\pi/2$. These gratings may be one-dimensional or two-dimensional. In some embodiments, the object being examined is placed downstream of the diffractive grating at a fractional Talbot distance $D_N$ represented by the equation

$$D_N = N_a \frac{p_1^2}{8\lambda} = \frac{N_a}{16} D_T \qquad \text{[Eqn. 3]}$$

where $p_1$ is the period of the beam splitting grating, $D_N$ is the fractional Talbot distance for a plane wave illumination, $\lambda$ is the mean x-ray wavelength, and $N_a$ is the

Talbot fractional order (N=1,2,3,... ) at which the object is placed. In some instances, the object is placed downstream of the diffractive grating at a distance that is not a fractional Talbot distance, but instead located at a distance wherein the wavefront is comprised of regions of anti-nodes and nodes that correspond to the periodic regions of interest for analysis.

Depending on the grating parameters (e.g. a $\pi$ phase shifting grating versus a $\pi/2$ phase shifting grating), optimal Talbot distances ($N_a$) may be chosen for interference patterns of interest or best suited for the application.

*1. Talbot Fringes as an Array of Micro-Beams.*

The microscope system and method of using it disclosed herein may be formed using any number of techniques that create an array of micro- or nano-scale x-ray beams used for illuminating an object. As an example, using an optical system to image either multiple arrayed x-ray sources or alternatively, an x-ray source having a transmission target with an array of microstructures, may provide "micro-beams" that correspond to the images of the source points within the depth of focus of the x-ray optical system.

Talbot fringes, especially those formed by a phase grating, are a highly efficient method of directing x-rays into a effective array of micro-beams. The effective lateral dimension of the Talbot anti-nodes (the beam diameter if the beams are constructed to be circular) can, using the appropriate beam-splitting grating to establish the fringes, be made to be very small (e.g. submicron, such as 20 nm or 300 nm). The Talbot interference pattern, when used to illuminate an object under investigation in transmission, provides an array of discrete micro- or nano-probes that can be detected and analyzed using an array detector. In this way, the x-ray microscope system can achieve submicron (e.g. 0.3 um) spatial resolution at high throughput. When the detector is selected to have a pixel size that corresponds to the pitch of the Talbot fringes, and both the object and the detector are placed within the effective "depth-of-focus" of the Talbot fringes, each pixel is detecting transmitted x-rays from a single one of the "micro-beams."

The contrast between the intensity of the plurality micro-beams and the regions between the micro-beams may be further improved by placing an absorbing grating of the same pitch as the micro-beams such that the x-rays between the micro-beams are attenuated.

As in the previously mentioned co-pending US Patent Applications and US Provisional Patent Applications, scanning the object in x- and y- dimensions allows the micro- or nano-scale probe to be moved over the object, and if the range of motion is as large as, or larger than, the Talbot fringe pitch, a high resolution "map" of the transmission of the object may be obtained with a relatively lower resolution x-ray pixel array detector. The "resolution" of the system is dictated solely by the size of the micro-beam, and is independent of the detector pixel size.

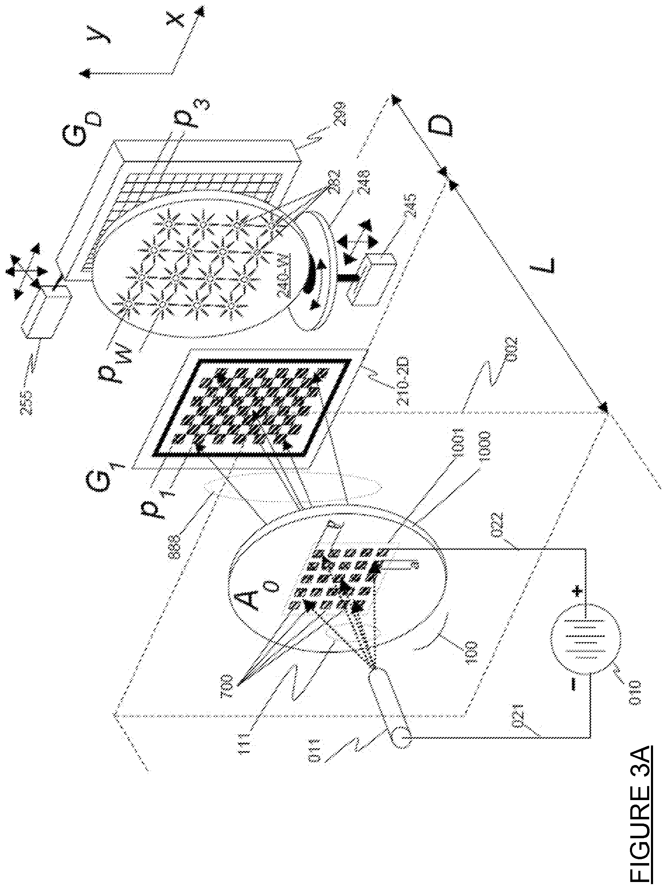

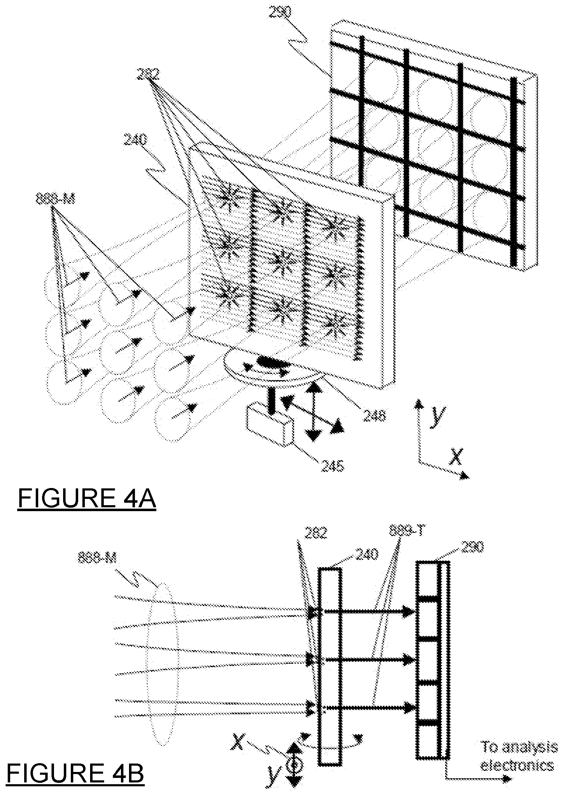

A schematic for such a system is illustrated in FIGURE 3A, and in more detail in FIGs. 4A and 4B. Source 011 provides electrons 111 to target 100 to generate an x-ray beam 888 which creates an array of microbeams after passing through a grating G1. The source of X-rays satisfies known constraints to realize the arrays of beamlets, preferably down to sub-micron size. The source of X-rays can be a single point or line source, or a periodic structured source such as a conventional source paired with an absorption (one-or two-dimensional) grating. Alternatively, a key development that yields increased throughput is decoupling the source size from the spatial resolution, which allows a large and consequently high power source to be used. One innovation of the present technology that enables greater x-ray power employs an x-ray source patterned according to a periodic pattern $A_0$. Such a system is illustrated in FIGURE 3A. In this configuration as illustrated, an x-ray source 11 has a target 100 having a substrate 1000 and a region 1001 containing discrete microstructures 700 of element size $a$ arranged in a periodic 2-D pattern with period $p_0$. When bombarded with electrons 111, these produce x-rays 888 in a periodic pattern with period $p_0$. In some instances, The target 100, which may include x-ray generating microstructures, x-ray blocking masks, and/or other elements described herein, can implement an x-ray generator.

Each microstructure 700 in target 100 of the structured source acts as an independent and mutually incoherent sub-source (or source points) of x-rays. The interference of these source points create a set of fringes in the sample plane that are laterally displaced with respect to the other source points. The pitch of the structured source and source to G1 distance can be selected to ensure that the fringes overlap in the sample plane. The increase in focused flux is proportional to the number of source points used.

In some instances, the source is sufficiently far from the G1 grating 210-2D to have a coherence length larger than the G1 grating period. If an individual sub-source apparent width is S, the distance between the source and G1 is Z and the radiation wavelength is L, then it holds that L*Z/S > p1 where p1 is the G1 period.

When an array of x-ray illumination beams (micro beams) 888-M is formed, the object 240 to be examined is illuminated at an array of discrete interaction locations 282. In many embodiments, the sample 248 is placed at a Talbot distance downstream of the beam-splitting grating. The positions can be scanned in x- and y-dimensions perpendicular to the direction of propagation of the micro-beams using a position controller 245, and the x-ray illumination beams 889-T resulting from the interaction of the micro-beams and the object can be detected by an array detector 290.

The array detector 290 will be aligned such that each pixel of the detector will be positioned to collect only x-rays corresponding to a single micro-beam. This is typically within the "depth of focus" of the anti-node. By pairing the use of multiple micro-beams paired with a detector having a pixel pitch matched to the pitch of the micro-beams, and aligned so that each pixel detects x-rays from only the interaction of a single micro-beam at a given position on the object, the equivalent of $10^2$ to $10^4$ parallel micro-beam detection systems can be created.

The object can then be scanned in x- and y-coordinates. This produces "maps" in parallel of the properties of the object, but the range of motion can be reduced to only correspond to the pitch of the micro-probes (although some overlap between scanned areas may be appropriate to provide a relative calibration between data collected for neighboring "maps"). The data in each point in the map is limited in resolution only by the lateral dimensions of the Talbot fringe, so a less expensive and/or more efficient detector with larger pixels can be used to collect high resolution images.

The "maps" generated by each pixel may then be stitched together digitally to produce a large-scale "macro-map" of the object properties, while reducing the corresponding data collection time by a factor related to the number of micro-beams (e.g. up to a factor of $10^4$).

To achieve some degree of tomographic analysis, limited angle adjustment of the object may also be added to the motion protocol, as long as the interaction of x-rays with the object as well as the corresponding detector pixel both remain within the depth-of-focus for all of the multiple micro-beams.

### 1.1 Alternative X-ray Sources

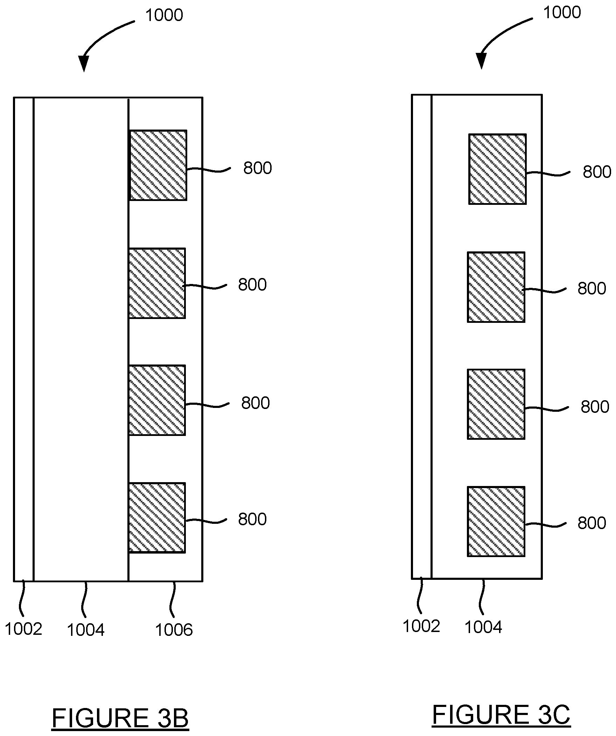

In some instances, the x-ray source target may comprise a microstructured mask. FIGURE 3B illustrates a substrate 1000 with an embedded microstructure mask. The substrate 1000 of FIGURE 3B includes a thin film 1002, a first substrate portion 1004, and a second substrate portion 1006. The substrate portions 1004 and 1005 may be formed of low atomic element materials such as diamond, Be, sapphire, etc. An electron beam bombarding the thin film 1002 generates x-rays within the thin film. The generated x-rays are blocked by microstructures 700 to create an effective array of x-ray sub-sources. Microstructures 700 may be placed onto substrate portion 1004 and covered or encapsulated by substrate portion 1006. Alternatively, they may be formed by embedding the microstructures within a single substrate portion, as shown in target 1000 of FIGURE 3C.

Though only one pattern of a microstructure element in target 1000 is illustrated in FIGURE 3A-3C, other implementations are possible and considered within the scope of this disclosure. For example, target 1000 can include multiple target patterns formed by any combination of microstructures and masks, wherein one or more of the multiple target patterns can have multiple depths within a substrate.

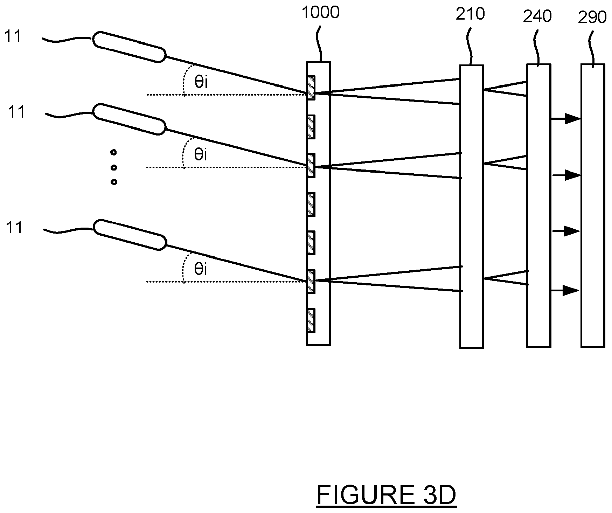

In some instances, the electron beam may be incident onto the target at an oblique angle. FIGURE 3D illustrates a system having one or more electron beams 11 bombarding a target 1000 at an oblique angle, such as between 20 degrees and 80 degrees. In some instances, the incidence angle of the electron beams on the target may be about 60 degrees. Providing the incident electron beam at an oblique angle allows for a higher energy x-ray beam from the target and reduces scattering in substrates such as diamond.

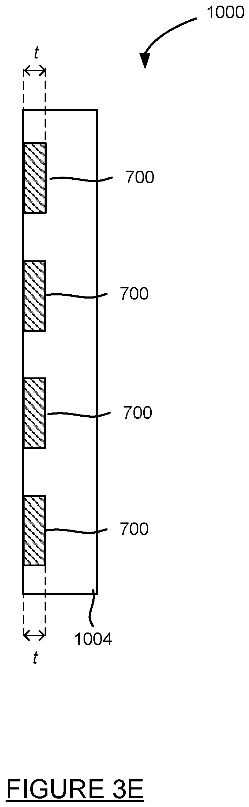

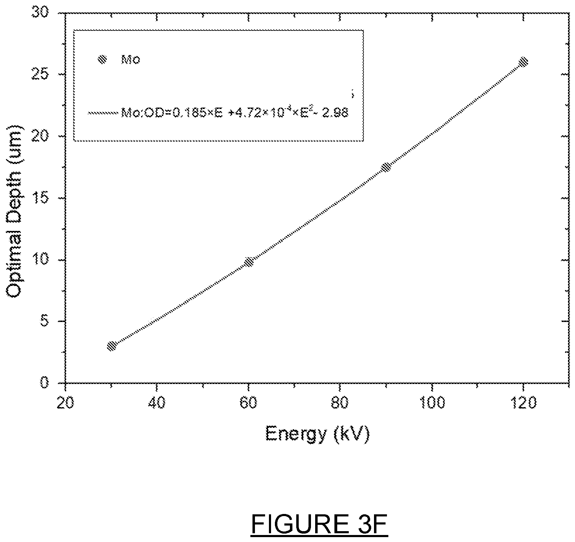

FIGURE 3E illustrates a target having a substrate 1004 (typically a low atomic material such as diamond) and microstructures 700. In some instances of the present technology, the thickness t of the targets can be optimized for the particular material to improve contrast between x-rays that are emitted the microstructures 700 and x-rays generated in the substrate. In some cases, the thicknesses are on the order of 2-10 um. In some instances, the depth of the target microstructure material within a substrate may be optimized to achieve a particular acceleration voltage. FIGURE 3F illustrates a plot of optimal thickness vs. acceleration voltage for molybdenum (Mo) microstructures. As shown, the relationship between the optimal depth in micrometers to the acceleration voltage in kilovolts is approximately linear. For example, for an energy of 60 kV, the optimal depth would be about 10 microns. Though only data for molybdenum is displayed, the optimal depth of a target microstructure for other materials may also be optimized for a particular acceleration energy.

Some microstructured targets may furthermore comprise electrically conductive layers, layers to improve thermal conductivity between the microstructure and the substrate, and/or diffusion barriers.

### 1.3 X-ray Source Filtering

When the micro-beams are generated by the Talbot effect, the bandwidth of the x-ray beams at the object to be examined must be within +/-15% of a predetermined x-ray energy of interest. This is typically achieved through the use of filters, such as thin metal foils.

### 2. Geometric Conditions

Returning to FIGURE 3A, the x-rays 888 that emerge from the arrayed source as an array of individually spatially coherent but mutually incoherent sub-sources of illumination for the beam splitting grating $G_1$ 210-2D placed at a distance L from the arrayed x-ray source $A_0$. The position of the object 240-W to be illuminated by the array of micro-beams is placed at a further distance D from the beam-splitting grating $G_1$ 210-2D. To ensure that each x-ray sub-source in $A_0$ contributes constructively to the image-formation process, the geometry of the arrangement should satisfy the condition:

$$p_0 = p_2 \frac{L}{D} \qquad \text{[Eqn. 4]}$$

When the condition is met, the x-rays from the many sub-sources of $A_0$ produce the same (overlapping) Talbot interference pattern, and because the various mutually incoherent sources do not interfere with each other, these Talbot patterns will add as intensities. The effect at the object 240-W is therefore to simply increasing the intensity of the micro-beams (along with it the signal-to-noise ratio) above what a single coherent source can provide. This configuration is called the Talbot-Lau interferometer. It should be noted that the arrayed x-ray source may also be provided in some embodiments using a uniform x-ray material and a masked grating that allows x-rays to emerge only from specific points arranged in an array of dimension $a$ and period $p_0$. An arrayed x-ray source may also be provided by selective bombardment of an x-ray generating material using a patterned electron beam.

The beam-splitting grating may be an amplitude grating with a 50/50 duty cycle, as illustrated in FIGURE 3A, or may be an amplitude grating with some other duty cycle. A phase-shifting beam-splitting grating may comprise a 1-D or 2-D periodic pattern of $\pi$ or $\pi/2$ phase-shifts.

To ensure that the object 240-W to be examined is illuminated by a periodic pattern of x-ray micro-beams, the distance D between the grating and the object should correspond to one of the fractional Talbot distances, i.e.

$$D = n \frac{2p_1^2}{16\lambda} \qquad \text{[Eqn. 5]}$$

where n is a non-zero integer. The suitable value of n may be different if the grating is a transmission grating, a $\pi$ phase-shifting grating, or a $\pi/2$ phase-shifting grating.

Another equation often used in Talbot-Lau systems relates the pitch $p_1$ of the Talbot grating $G_1$ to the size $a$ of the x-ray generating elements in the arrayed source:

$$p_1 \geq L \frac{\lambda}{a} \qquad \text{[Eqn. 6]}$$

The embodiments of the invention employ a interferometric system in which the conditions presented in Eqns. 4-6 are met.

In some embodiments, the object 240-W to be examined may be mounted on a position controller 245 that may be controlled to translate the object 240-W in x- and y-dimensions. For some embodiments, additional rotation of the object for generating tomographic imaging data may also be controlled by the mounting system. In some embodiments, a 5-axis mount, or a goniometer, may be used.

It should be noted that these embodiments as illustrated are not to scale.

## 3. Detector Considerations

As disclosed here, the detector pitch will be matched to the pitch of the multiple microbeams so that each pixel is positioned to only detect x-rays emerging from the interaction of the object with a single micro-beam, and the cross-talk between pixels due to neighboring micro-beams is minimized. Then, the data collection and final reconstruction of the "map" of the properties of the object may proceed, knowing that the distinct signals from each pixel need not be further deconvolved. If there is cross-talk between micro-beams and pixels (e.g. due to scattering or fluorescence), additional image analysis may be able to remove some of the cross-talk if it can be properly calibrated. Energy resolving array detectors may also be used to separate signals from transmitted x-rays, scattered x-rays, and fluorescence x-rays.

This matching is most straightforwardly achieved if the detector pitch is a 1:1 match to the pitch of the micro-beams, i.e. each beam has a corresponding single pixel in the detector, and the detector is placed in close proximity to the object and the micro-beams.

### 3.1 Finer Detector Pitch

In some embodiments, detector pitches that are integer fractions of the pitch of the micro-beams (e.g. a 2x reduction in pitch, which would indicate, for example, in a 2-D array, that 4 pixels are positioned to collect the x-rays corresponding to a single micro-beam, or a 3x reduction in pitch, which would indicate 9 pixels are present to detect the x-rays corresponding to each micro-beam) may also be used. This may offer some advantages if the x-rays being detected have some spatial structure, for example if the desired x-ray signal is related to small-angle scattering from the object. Then, certain pixels of the detector can be aligned to detect only the scattered x-rays, while the non-scattered beam may be collected by a different pixel, or simply blocked.

### 3.2. Larger Detector Pitch.

In other embodiments, a larger detector pixel may be used. In this case, a pixel size that is larger than the pitch of the Talbot fringe may be used, as long as the active area of each pixel of the detector (the portion converting x-rays into an electronic signal) is on the order of the same size as the corresponding x-ray micro-beam. The detector may therefore be less expensive, and yet still produce a "high resolution" signal (since the spatial resolution is determined by the interaction volume of the Talbot fringe and the object, not the detector pixel size).

One disadvantage of this technique is that only 1 out of 4 Talbot fringes is used for detection, and the other fringes are wasted. Although certain Talbot fringes will end up not being used, the missing information may still be provided by scanning over the distance between detector pixel centers. And furthermore, with a larger pixel, greater detection efficiency may be achieved for the micro-beams that are detected.

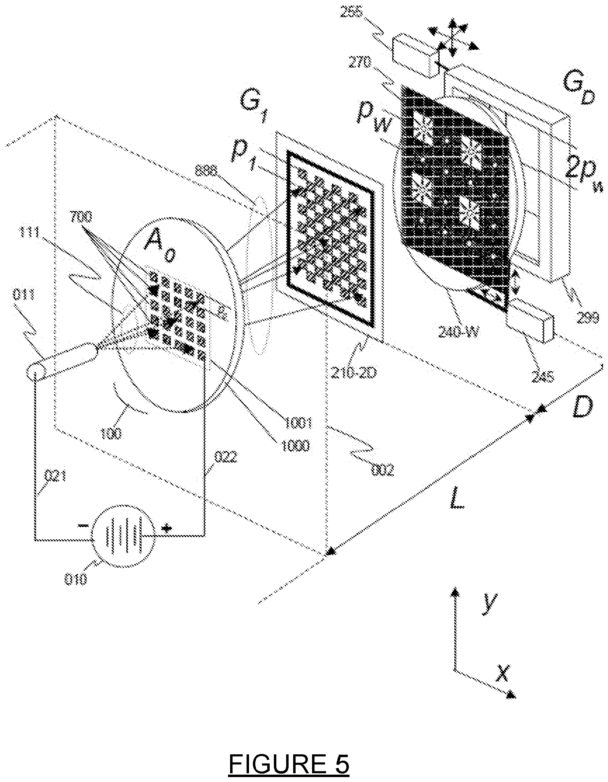

FIGs. 5-12 illustrate the use of larger pixels in some embodiments of the invention. FIGURE 5 illustrates a schematic of an embodiment of a system similar to that of FIGURE 3A, but in which a mask has been placed in front of the object 240-W to block a certain number of micro-beams. As illustrated, 3 out of every 4 micro-beams are blocked, with only 1 beam out of 4 proceeding to illuminate the object and then be detected by the detector, but any number of beams may be blocked according to predetermined patterns for various applications.

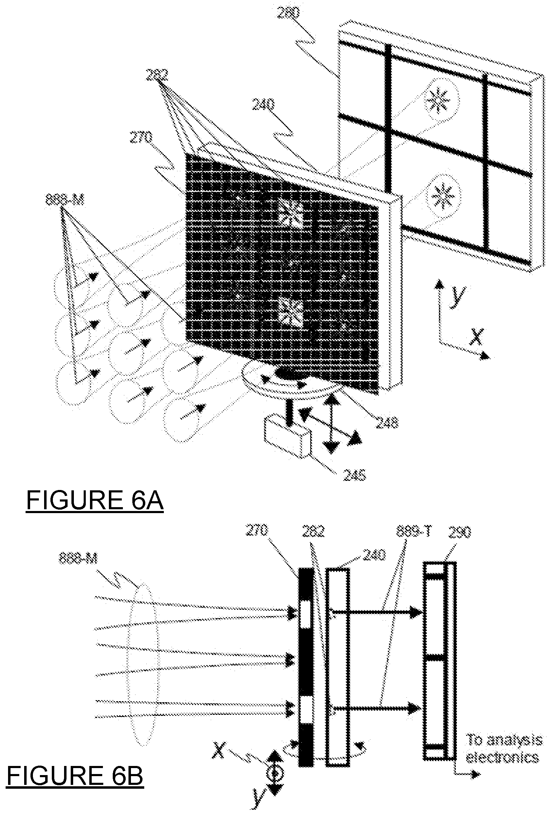

FIGURE 6A and 6B illustrate such an embodiment in more detail, presenting illustrations similar to those of FIGs. 4A and 4B. As can be seen by the comparison with FIGs. 4A and 4B, because only a certain number of micro-beams are used, the pitch of beams at the detector is substantially larger, and a less expensive detector with a larger pixel size may be used.

As illustrated in FIGURES 3 through 6B, the x-ray detector is presented as a direct array detector, generating an electrical signal in response to the absorption of x-rays. Such an electronic sensor may directly create an electrical signal in response to the absorption of x-rays, by, for example, the creation of direct electron-hole pairs in amorphous selenium (*a*-Se). These are then converted into electronic signals using an array of thin-film transistors (TFTs). Such direct flat panel detectors (FPDs) such as the Safire FPD of Shimadzu Corp. of Kyoto, Japan, are commercially available.

In other embodiments, the detector may use scintillators that emit visible or ultraviolet light when exposed to x-rays. The active x-ray detection region may be defined, for example, by providing a scintillator such as cesium iodide doped with thallium (CsI(Tl)) or by providing a detector with a uniform coating of scintillator with a masking layer of high Z material, for example, gold (Au), on top.

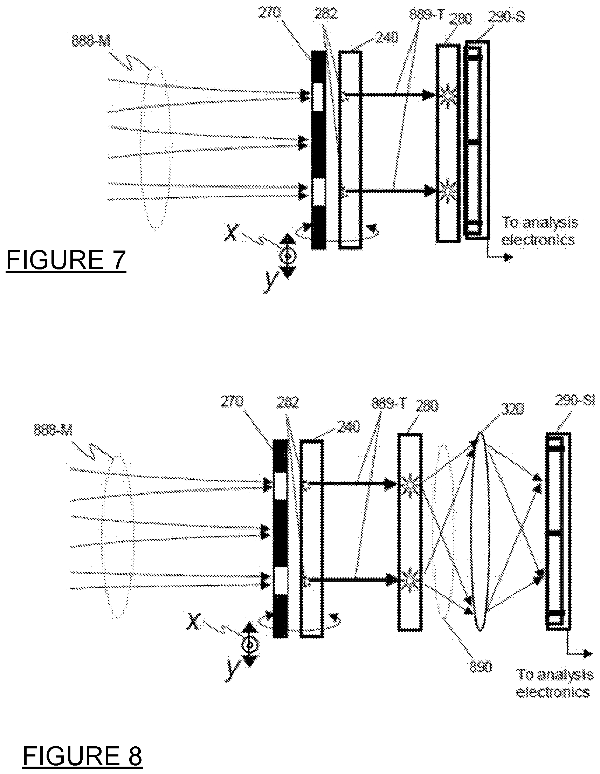

FIGURE 7 illustrates a variation of the embodiment of FIGURE 6B, but using a detector 290-S in combination with a fluorescent screen or scintillator 280. The scintillator 280 comprises a material that emits visible and/or UV photons when x-rays are absorbed, and the detector 290-S detects those visible and/or UV photons. Typical scintillator materials comprise a layer of cesium iodide (CsI), thallium doped CsI, yttrium aluminium garnet (YAG) or gadolinium sulfoxylate (GOS).

In conventional imaging systems, high resolution images with a scintillator-type detector in close proximity to the object can be obtained, but the overall thickness of the scintillator and electronic elements must be thin enough so that each detector pixel is collecting only x-rays corresponding to that pixel.

However, in the system disclosed herein, the spatial resolution is defined by the dimensions of the micro-beams 888-M instead of the detector pixel size. This allows a larger pixel and thereby a thicker scintillator material to be used, since every photon generated from the larger pixel will be known to have originated from a predetermined micro-beam. The thicker scintillator increases the probability that a given x-ray photon will be absorbed and converted to visible light, increasing the potential signal.

Some additional number of x-ray photons will generate secondary electrons in the scintillator material, which may in turn excite additional visible/UV emission from the scintillator material. However, as all x-ray photons within the pixel are known to have originated from a single micro-beam, the additional photons emerging from this excitation are also known to have their origin with these spatially defined x-rays, and simply increase the overall signal that may be detected.

FIGURE 8 illustrates an additional variation on a system using a scintillator, in which the visible/UV light 890 from the scintillator 280 is collected by a visible/UV optical system 320 and imaged onto a detector 290-SI. The visible/UV optical system may comprise optics with additionally magnify the image of the scintillator. When using relay optics and a magnified image, the electronic detector need not comprise a high resolution sensor itself, and less expensive commercial CCD detectors or complementary metal-oxide-semiconductor (CMOS) sensor arrays with, for example, 1024 x 1024 pixels, each 24 $\mu$m x 24 $\mu$m square, may be used.

Thicker scintillators may also be used in some embodiments having relay optics, increasing sensitivity. However, when relay optics are used, detection is limited to the field of view collected by the x-ray optics, which may in some cases be only on the order of hundreds of microns. Collecting data on larger areas will then need to be "stitched" together from several exposures.

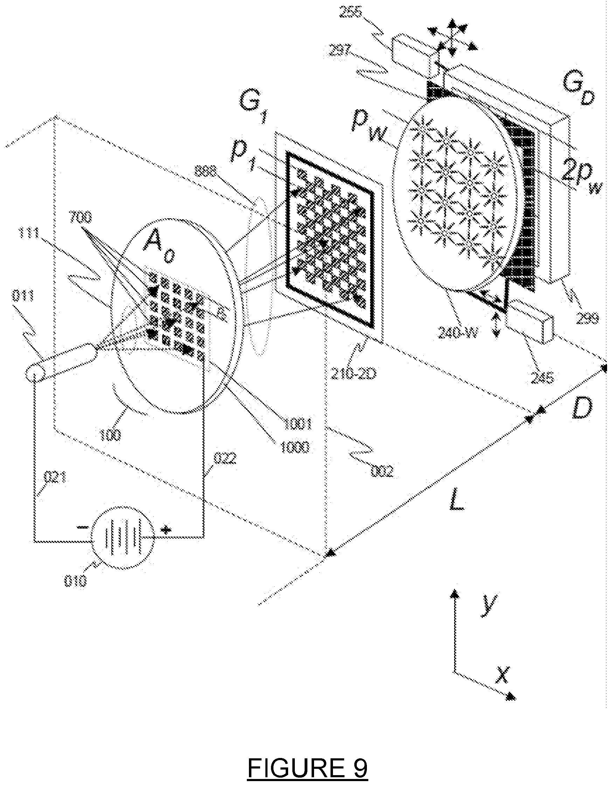

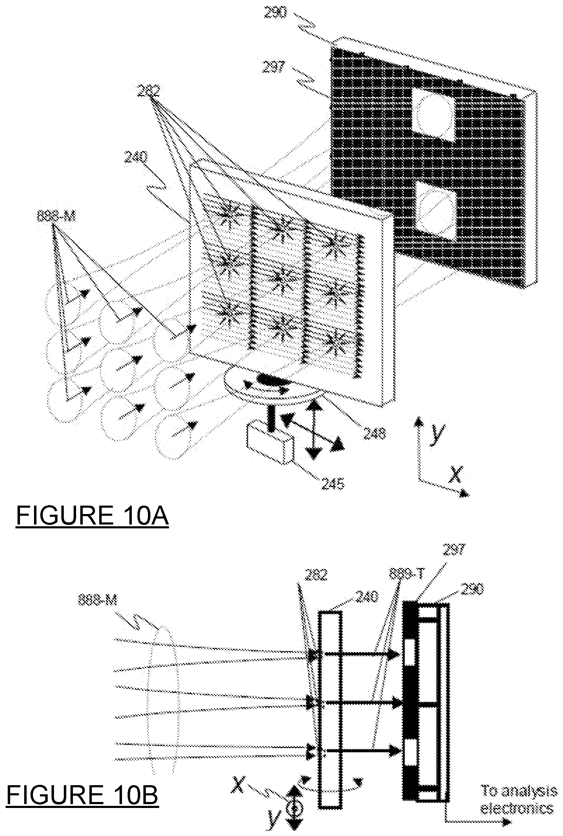

FIGs. 9, 10A and 10B represent an additional embodiment in which a masking structure 297 is placed between the object 240 and the detector. For this embodiment, all available micro-beams 888-M illuminate the object 240, but a masking layer 297 made of, for example, gold (Au), prevents 3 out of every 4 beams from entering the detector 290. This also allows detector 290 to have a larger pixel, again reducing cost for direct detectors and, for embodiments using scintillators, increasing potential detector efficiency.

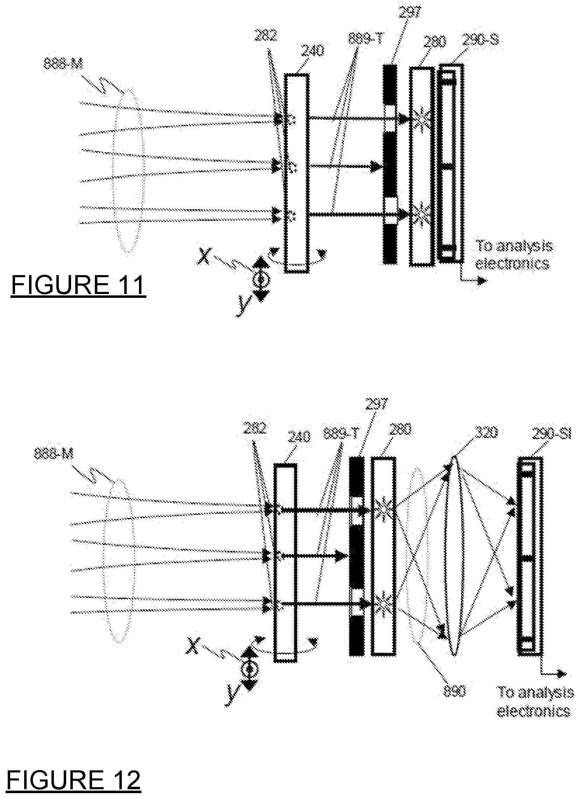

FIGURE 11 illustrates an additional variation of the embodiment of FIGs. 9, 10A and 10B, but with the detection of x-rays achieved using a scintillator 280 and a visible/UV detector 290-S.

FIGURE 12 illustrates an additional variation on a system using a scintillator, in which the visible/UV light 890 from the scintillator 280 is collected by a visible/UV optical system 320 and imaged onto a detector 290-SI.

Although the scintillators as illustrated in FIGs. 7, 8, 11, and 12 are shown as comprising uniform layers of scintillator, embodiments using patterned scintillator material, in which scintillator material is placed only over a portion of the pixel, may also be used. The selective placement of scintillator material over portions of the detector may be used as an alternative to the use of a masking layer to select certain micro-beams for detection.

Detectors with additional structure within each pixel may also be employed as well. For example, if the typical detector pixel is 2.5 microns by 2.5 microns (an area of 6.25 micron$^2$), but the micro-beam diameter is only 1 micron, a detector pixel with a central "spot" of scintillator material slightly larger than 1 micron, surrounded by "dead" zones, and positioned to correspond to the position of the micro-beam may be created. With this configuration, all the x-rays from the micro-beam should be detected, while reducing the detection of scattered or diffracted x-rays that would otherwise cause spurious signals if the full area of the detector pixel were to be used.

Likewise, pixels in which detector structures (such as scintillator material) are only positioned on the outer portion of the pixel, for example, to only detect x-rays scattered at small angles while not detecting the directly transmitted beam, may also be used for some embodiments.

Likewise, although the mask 297 in FIGURE 11 and 12 is shown as displaced from the scintillator layer, some embodiments may have the masking layer directly deposited onto the scintillator layer. Other embodiments for patterned scintillators may be known to those skilled in the art.

### 3.0 Methods of Microscopic Data Gathering.

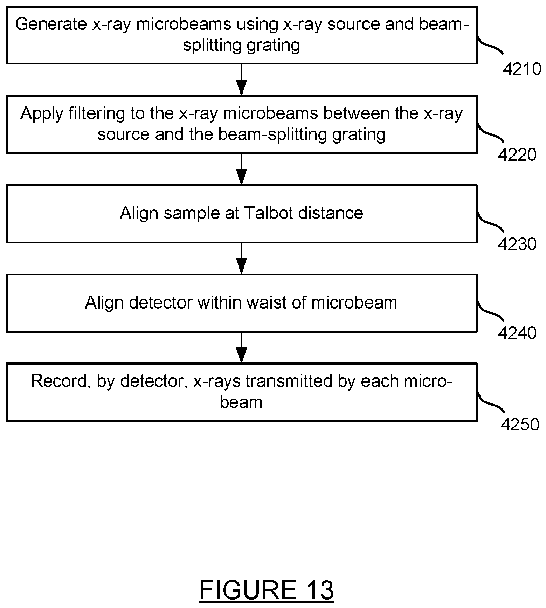

FIGURE 13 illustrates method for collecting microscopy data. The data collection may be used to form a 2-D "map" or 3-D tomographic image.

X-ray microbeams are generated in step 4210 through the use of an x-ray source and a beam-splitting grating, preferably a phase grating. In some instances, the x-ray source employs an x-ray target comprised of microstructures on or embedded within a substrate of low mass density (e.g. diamond or Be). In some instances, the x-ray source employs a target comprising a thin film coated on top of a substrate of low mass density and furthermore comprising embedded microstructures that serve as a "mask" to block a portion of the x-ray beams. In some instances, the x-ray source is an extended x-ray source and is used in combination with an absorbing grating. In some instances, the x-ray source is a microfocus x-ray source.

A filtering method is placed 4220 between the x-ray source and the beam-splitting grating to limit the bandwidth of the x-rays from the x-ray source to a bandwidth. In some instances, the bandwidth of the illumination beam can be ± 15%, depending on which pre-determined Talbot or fractional Talbot distance is used.

An object to be examined is aligned 4230 at a Talbot distance such that the region of nodes (darkest intensity) and anti-nodes (highest intensity) of the microbeam has a pitch $p$ in the directions orthogonal to the propagation direction (designated the "x" and "y" directions) is 20 micrometers or less. The contrast between regions of greatest intensity (generally at the center of the micro-beams) and the darkest intensity (generally the region exactly between micro-beams) is preferred to be at least 20%, although in some cases, an intensity ratio of 1.2:1 or 2:1 between the anti-nodes and nodes may provide enough contrast. In some instances, the bandwidth of the illumination beam satisfies the following equation:

$$\Delta\lambda = \frac{\lambda_0}{2m-1},$$

A detector is aligned 4240 within the "waist" of the microbeams so that each detector pixel generates signals corresponding to a single microbeam. For the micro-beams formed by an imaging system, this position corresponds to the depth-of-focus of the imaging system. In most instances, the detector pixel pitch and microbeam are the same or approximate with some scaling, such that the center of each microbeam is coincident upon the center of the detector pixel.

For micro-beams formed by a Talbot system, this may correspond to the position of the interference pattern at a fractional or integer multiple of the Talbot Distance, where self-replicating images are formed. There is some flexibility in the exact positioning of the detector, as long as each pixel of the detector generates a signal corresponding only to a single micro-beam (without cross-talk between the micro-beams or detector pixels). Generally, a detector will be chosen where every micro-beam has a corresponding pixel or set of pixels; however, in some embodiments, the detector may only detect a subset of the micro-beams. In some instances, a detector can be chosen to having a pixel pitch $p_d$ equal to a non-zero integer multiple of the micro-beam pitch $p$.

X-rays transmitted by each microbeam are recorded 4250 by the detector, and the corresponding electronic signals representing x-ray intensity and energy are recorded.

If only a single set of datapoints are desired, no more data need be collected. In most embodiments, however, the object to be examined is moved 4260 using a position controller to build up a 1-D or 2-D "map" of the properties of the object. This is typically performed so that the object is moved several times corresponding to to the FWHM of each microbeam region of highest intensity and moved in both x and y dimensions.

If no information beyond a 2-D scan in x- and/or y-dimensions is needed, the present system can take the accumulated data and, in this case, use various image "stitching" techniques that are generally well known in the art, synthesize a 2-D intensity "map" representing the large-area x-ray transmission/absorption of the object.

If, on the other hand, 3-D information is desired, the object is rotated through an angle relative to the z-axis (this rotation may be a rotation around either the x- or y-dimensions) to collect a set of data from the x-ray detector at this alternative rotation position. The system will loop through these steps to collect x-ray information at a preprogrammed sequence of positions and rotations until a complete set of data is collected. At this point, the system will then proceed to take the accumulated data and, in this case, use various image 3-D analysis techniques that are generally well known in the art, to synthesize a 3-D representation of the large-area x-ray transmission/absorption of the object.

Variations on the method described above may also be put into practice. For example, instead of first executing a loop of data collection in x- and y-dimensions at a fixed rotation position, and then changing the rotation setting to collect additional data, embodiments in which the object is rotated by a mechanical mechanism while the x- and y-position settings remain fixed may also be executed. Rotation of the object around the z-axis may also provide additional information that can be used in image tomosynthesis.

**4. Limitations and Extensions.**

With this Application, several embodiments of the invention, including the best mode contemplated by the inventors, have been disclosed. It will be recognized that, while specific embodiments may be presented, elements discussed in detail only for some embodiments may also be applied to others. Also, details and various elements described as being in the prior art may also be applied to various embodiments of the invention. While specific materials, designs, configurations and fabrication steps have been set forth to describe this invention and the preferred embodiments, such descriptions are not intended to be limiting. Modifications and changes may be apparent to those skilled in the art, and it is intended that this invention be limited only by the scope of the appended claims.

**Claims**

1. An x-ray microscope system comprising:

an x-ray illumination beam generating system comprising:

an x-ray source;
and a beam-splitting grating (210-2D), wherein said x-ray illumination beam generating system produces a plurality of x-ray micro-beams (888) through the Talbot effect, the plurality of x-ray micro-beams having a depth-of-focus range of a set of Talbot anti-nodes, an axis of propagation and a predetermined intensity profile normal to said axis for a predetermined x-ray energy;

a means to position an object (240) to be examined within a depth-of-focus range corresponding to one Talbot anti-node and to move the object relative to said plurality of micro-beams; and at least one x-ray pixel array detector (290) for detecting x-rays resulting from interaction of said plurality of x-ray micro-beams with said object, said detector comprising a plurality of pixels within said depth-of-focus range of the said micro-beams such that the x-rays detected by any given pixel of the detector correspond to the transmitted x-rays through the object to be examined from primarily one micro-beam.

2. The x-ray microscope system of Claim 1, wherein the beam-splitting grating is a $\pi$, phase-shifting grating or a $\pi/2$ phase-shifting grating at said predetermined x-ray energy.

3. The x-ray microscope system of Claim 1, wherein the x-ray source comprises:

an emitter (011) for an electron beam (111); and a transmission x-ray target (100) comprising a plurality of discrete microstructures (700) comprising a first material having a first mass density and a substrate comprising a second material having a second mass density lower than the first mass density.

4. The x-ray microscope system of Claim 3, wherein:

the energy of the electron beam is greater than 1.1 times of the predetermined x-ray energy; or the electron beam is incident upon the target at an oblique angle.

5. The x-ray microscope system of Claim 1, wherein the x-ray source is a microfocus x-ray source or an extended x-ray source used in combination with an absorption grating.

6. The x-ray microscope system of Claim 1, further comprising at least one filter so that the full width half maximum of the bandwidth of the plurality of x-ray micro-beams is 30% centered at the predetermined x-ray energy.

7. The x-ray microscope system of Claim 1, wherein the means to position the object to be examined relative to the x-ray microbeams further comprises:

a means (245) to translate the object so that a 2D image of the object can be acquired; and/or a means to rotate the object so that a 3D tomography of the object can be acquired.

8. The x-ray microscope system of Claim 1, wherein the detector is a CCD-based detector and is aligned such that centers of the pixels are aligned to centers of the x-ray micro-beams.

9. The x-ray microscope system of Claim 1, further comprising a display means and an analysis system configured to display and analyze output signals from the detector.

10. The x-ray microscope system of Claim 1, further comprising:

    a mask positioned to block a predetermined number of the x-ray micro-beams; and/or a mask positioned (297) upstream of the detector to block a predetermined number of the x-ray micro-beams transmitted through the object.

11. The x-ray microscope system of Claim 1, in which the system achieves submicron spatial resolution.

12. The x-ray microscope system of Claim 1, wherein each pixel comprises an actively detecting area at a center of the pixel, the actively detecting area comprising less than 50% of a total area of the pixel.

13. The x-ray microscope system of Claim 1, further comprising an attenuating grating placed upstream of the detector and positioned to absorb x-rays between the x-ray micro-beams to increase the intensity ratio between micro-beams and the regions between the x-ray micro-beams.

14. A method for measuring the x-ray transmission of an object using the microscope system of any of claims 1-14, the method comprising:

    producing an x-ray Talbot interference pattern comprising a plurality of anti-nodes and having a depth-of-focus range of a set of Talbot anti-nodes;
    positioning an x-ray array detector comprising a plurality of pixels such that the plurality of pixels are within the depth-of-focus range corresponding to one Talbot anti-node of the x-ray Talbot interference pattern such that x-rays detected by a given pixel of the detector correspond to only one anti-node of the x-ray Talbot interference pattern; and
    positioning an object to be examined within said depth-of focus range and such that x-rays of at least some of the anti-nodes transmitted through the object to be examined are detected by the detector.

15. The method of claim 14, further comprising:

    blocking at least some of the x-rays transmitted through the object from being detected by the detector; and/or
    blocking at least some x-rays of the x-ray Talbot interference pattern from reaching the object, wherein optionally said blocking comprises positioning a mask in front of the object and, wherein optionally the mask is positioned within the depth-of-focus.

**Patentansprüche**

1. Röntgenmikroskopsystem, das Folgendes umfasst:
   ein Röntgenbeleuchtungsstrahl-Erzeugungssystem, das Folgendes umfasst:

   eine Röntgenquelle;
   und ein Strahlenteilungsgitter (210-2D),
   wobei das Röntgenbeleuchtungsstrahl-Erzeugungssystem eine Vielzahl von Röntgenmikrostrahlen (888) durch den Talbot-Effekt produziert, wobei die Vielzahl von Röntgenmikrostrahlen einen Abbildungstiefebereich eines Satzes von Talbot-Antiknoten, eine Ausbreitungsachse und ein vorbestimmtes Intensitätsprofil normal zu der Achse für eine vorbestimmte Röntgenenergie aufweist;
   ein Mittel zum Positionieren eines zu untersuchenden Objekts (240) innerhalb eines Abbildungstiefebereichs, der einem Talbot-Antiknoten entspricht, und zum Bewegen des Objekts relativ zu der Vielzahl von Mikrostrahlen; und
   mindestens einen Röntgenpixel-Array-Detektor (290) zum Erkennen von Röntgenstrahlen, die aus der Wechselwirkung der Vielzahl von Röntgenmikrostrahlen mit dem Objekt resultieren, wobei der Detektor eine Vielzahl von Pixeln innerhalb des Abbildungstiefebereichs der Mikrostrahlen umfasst, sodass die von einem beliebigen gegebenen Pixel des Detektors erkannten Röntgenstrahlen den durch das zu untersuchende Objekt transmittierten Röntgenstrahlen von hauptsächlich einem Mikrostrahl entsprechen.

2. Röntgenmikroskopsystem nach Anspruch 1, wobei das Strahlenteilungsgitter ein $\pi$-Phasenverschiebungsgitter oder ein $\pi/2$-Phasenverschiebungsgitter bei der vorbestimmten Röntgenenergie ist.

3. Röntgenmikroskopsystem nach Anspruch 1, wobei die Röntgenquelle Folgendes umfasst:

einen Emitter (011) für einen Elektronenstrahl (111); und

ein Transmissions-Röntgenziel (100), das eine Vielzahl von diskreten Mikrostrukturen (700) umfasst, die ein erstes Material mit einer ersten Massendichte und ein Substrat umfassen, das ein zweites Material mit einer zweiten Massendichte umfasst, die niedriger als die erste Massendichte ist.

4. Röntgenmikroskopsystem nach Anspruch 3, wobei:

die Energie des Elektronenstrahls größer als das 1,1-fache der vorbestimmten Röntgenenergie ist; oder
der Elektronenstrahl in einem schrägen Winkel auf das Ziel einfällt.

5. Röntgenmikroskopsystem nach Anspruch 1, wobei die Röntgenquelle eine Mikrofokus-Röntgenquelle oder eine erweiterte Röntgenquelle ist, die in Kombination mit einem Absorptionsgitter verwendet wird.

6. Röntgenmikroskopsystem nach Anspruch 1, das ferner mindestens einen Filter umfasst, sodass die Halbwertsbreite der Bandbreite der Vielzahl von Röntgenmikrostrahlen zu 30 % auf die vorbestimmte Röntgenenergie zentriert ist.

7. Röntgenmikroskopsystem nach Anspruch 1, wobei das Mittel zum Positionieren des zu untersuchenden Objekts relativ zu den Röntgenmikrostrahlen ferner Folgendes umfasst:

ein Mittel (245) zum Verschieben des Objekts, sodass ein 2D-Bild des Objekts aufgenommen werden kann; und/oder
ein Mittel zum Drehen des Objekts, sodass eine 3D-Tomographie des Objekts aufgenommen werden kann.

8. Röntgenmikroskopsystem nach Anspruch 1, wobei der Detektor ein CCDbasierter Detektor ist und so ausgerichtet ist, dass Zentren der Pixel auf Zentren der Röntgenmikrostrahlen ausgerichtet sind.

9. Röntgenmikroskopsystem nach Anspruch 1, das ferner ein Anzeigemittel und ein Analysesystem umfasst, die zum Anzeigen und Analysieren von Ausgangssignalen des Detektors konfiguriert sind.

10. Röntgenmikroskopsystem nach Anspruch 1, das ferner Folgendes umfasst:

eine Maske, die zum Blockieren einer vorbestimmten Anzahl der Röntgenmikrostrahlen positioniert ist; und/oder
eine Maske, die stromaufwärts des Detektors positioniert (297) ist, um eine vorbestimmte Anzahl der durch das Objekt transmittierten Röntgenmikrostrahlen zu blockieren.

11. Röntgenmikroskopsystem nach Anspruch 1, in dem das System eine räumliche Auflösung im Submikronbereich erreicht.

12. Röntgenmikroskopsystem nach Anspruch 1, wobei jedes Pixel einen aktiv detektierenden Bereich in einem Zentrum des Pixels umfasst, wobei der aktiv detektierende Bereich weniger als 50 % eines Gesamtbereichs des Pixels umfasst.

13. Röntgenmikroskopsystem nach Anspruch 1, das ferner ein Dämpfungsgitter umfasst, das stromaufwärts des Detektors platziert und zum Absorbieren von Röntgenstrahlen zwischen den Röntgenmikrostrahlen positioniert ist, um das Intensitätsverhältnis zwischen Mikrostrahlen und den Regionen zwischen den Röntgenmikrostrahlen zu erhöhen.

14. Verfahren zum Messen der Röntgentransmission eines Objekts unter Verwendung des Mikroskopsystems nach einem der Ansprüche 1 bis 14, wobei das Verfahren Folgendes umfasst:

Produzieren eines Röntgen-Talbot-Interferenzmusters, das eine Vielzahl von Anti-Knoten umfasst und einen Abbildungstiefebereich eines Satzes von Talbot-Anti-Knoten aufweist;
Positionieren eines Röntgen-Array-Detektors, der eine Vielzahl von Pixeln umfasst, sodass die Vielzahl von Pixeln innerhalb des Abbildungstiefebereichs liegen, der einem Talbot-Antiknoten des Röntgen-Talbot-Interferenzmusters entspricht, sodass Röntgenstrahlen, die von einem beliebigen gegebenen Pixel des Detektors erkannt werden, nur einem Anti-Knoten des Röntgen-Talbot-Interferenzmusters entsprechen; und
Positionieren eines zu untersuchenden Objekts innerhalb des Abbildungstiefebereichs und so, dass Röntgenstrahlen von mindestens einigen der durch das zu untersuchende Objekt transmittierten Anti-Knoten von dem Detektor erkannt werden.

15. Verfahren nach Anspruch 14, das ferner Folgendes umfasst:

Blockieren des Erkennens mindestens einiger der durch das Objekt transmittierten Röntgenstrahlen durch den Detektor; und/oder
Blockieren mindestens einiger Röntgenstrahlen des Röntgen-Talbot-Interferenzmusters, damit sie das Objekt nicht erreichen, wobei das Blockieren optional das Positionieren einer Maske vor dem Objekt umfasst, und wobei die Maske optional innerhalb der Abbildungstiefe positioniert ist.

## Revendications

1. Système de microscope à rayons X comprenant :
un système de génération de faisceaux d'illumination de rayons X comprenant :

   une source de rayons X ;
   et un réseau de division de faisceau (210-2D), dans lequel ledit système de génération de faisceaux d'illumination de rayons X produit une pluralité de microfaisceaux de rayons X (888) par l'effet Talbot, la pluralité de microfaisceaux de rayons X ayant une plage de profondeur de foyer d'un ensemble d'anti-nœuds de Talbot, un axe de propagation et un profil d'intensité prédéterminé normal audit axe pour une énergie de rayons X prédéterminée ;
   un moyen de positionner un objet (240) à examiner dans une plage de profondeur de foyer correspondant à un anti-noeud de Talbot et de déplacer l'objet par rapport à ladite pluralité de microfaisceaux ; et
   au moins un détecteur à matrice de pixels de rayons X (290) pour détecter des rayons X résultant de l'interaction de ladite pluralité de microfaisceaux de rayons X avec ledit objet, ledit détecteur comprenant une pluralité de pixels dans ladite plage de profondeur de foyer desdits microfaisceaux, de sorte que les rayons X détectés par un quelconque pixel donné du détecteur correspondent aux rayons X transmis à travers l'objet à examiner à partir d'un microfaisceau principalement.

2. Système de microscope à rayons X selon la revendication 1, dans lequel le réseau de division de faisceau est un réseau à déphasage de $\pi$ ou un réseau à déphasage de $\pi/2$ à ladite énergie de rayons X prédéterminée.

3. Système de microscope à rayons X selon la revendication 1, dans lequel la source de rayons X comprend :

   un émetteur (011) pour un faisceau d'électrons (111) ; et
   une cible de transmission de rayons X (100) comprenant une pluralité de microstructures discrètes (700) comprenant un premier matériau ayant une première densité de masse et un substrat comprenant un deuxième matériau ayant une deuxième densité de masse inférieure à la première densité de masse.

4. Système de microscope à rayons X selon la revendication 3, dans lequel :

   l'énergie du faisceau d'électrons est supérieure à 1,1 fois l'énergie prédéterminée des rayons X ; ou
   le faisceau d'électrons est incident sur la cible à un angle oblique.

5. Système de microscope à rayons X selon la revendication 1, dans lequel la source de rayons X est une source de rayons X microfocale ou une source de rayons X étendue utilisée en combinaison avec un réseau d'absorption.

6. Système de microscope à rayons X selon la revendication 1, comprenant en outre au moins un filtre de sorte que la largeur totale à mi-hauteur de la bande passante de la pluralité de microfaisceaux de rayons X soit centrée à 30 % sur l'énergie de rayons X prédéterminée.

7. Système de microscope à rayons X selon la revendication 1, dans lequel le moyen de positionner l'objet à examiner par rapport aux microfaisceaux de rayons X comprend en outre :

   un moyen (245) de faire translater l'objet afin d'acquérir une image 2D de l'objet ; et/ou
   un moyen de faire tourner l'objet afin d'obtenir une tomographie 3D de l'objet.

8. Système de microscope à rayons X selon la revendication 1, dans lequel le détecteur est un détecteur basé sur CCD et est aligné de manière à ce que des centres des pixels soient alignés sur des centres des microfaisceaux de rayons X.

9. Système de microscope à rayons X selon la revendication 1, comprenant en outre un moyen d'affichage et un système d'analyse configurés pour afficher et analyser des signaux de sortie en provenance du détecteur.

10. Système de microscope à rayons X selon la revendication 1, comprenant en outre :

    un masque positionné de manière à bloquer un nombre prédéterminé de microfaisceaux de rayons X ; et/ou
    un masque positionné (297) en amont du détecteur pour bloquer un nombre prédéterminé de microfaisceaux de rayons X transmis à travers l'objet.

11. Système de microscope à rayons X selon la revendication 1, dans lequel le système atteint une résolution spatiale submicronique.

**12.** Système de microscope à rayons X selon la revendication 1, dans lequel chaque pixel comprend une zone de détection active à un centre du pixel, la zone de détection active représentant moins de 50 % d'une surface totale du pixel.

**13.** Système de microscope à rayons X selon la revendication 1, comprenant en outre un réseau d'atténuation placé en amont du détecteur et positionné de manière à absorber des rayons X entre les microfaisceaux de rayons X pour augmenter le rapport d'intensité entre des microfaisceaux et les régions situées entre les microfaisceaux de rayons X.

**14.** Procédé de mesure de la transmission des rayons X d'un objet à l'aide du système de microscope selon l'une quelconque des revendications 1 à 14, le procédé comprenant les étapes consistant à :

produire un motif d'interférence Talbot à rayons X comprenant une pluralité d'anti-noeuds et ayant une plage de profondeur de foyer d'un ensemble d'anti-noeuds de Talbot ;

positionner un détecteur de rayons X comprenant une pluralité de pixels de telle sorte que la pluralité de pixels se trouve dans la plage de profondeur de foyer correspondant à un anti-noeud de Talbot du motif d'interférence Talbot pour les rayons X, de telle sorte que des rayons X détectés par un quelconque pixel donné du détecteur correspondent à un seul anti-noeud du motif d'interférence Talbot pour les rayons X ; et

positionner un objet à examiner dans ladite plage de profondeur de foyer et de manière à ce que des rayons X d'au moins une partie des anti-noeuds transmis à travers l'objet à examiner soient détectés par le détecteur.

**15.** Procédé selon la revendication 14, comprenant en outre les étapes consistant à :

empêcher qu'au moins une partie des rayons X transmis par l'objet ne soit détectée par le détecteur ; et/ou

empêcher au moins certains rayons X du motif d'interférence Talbot pour les rayons X d'atteindre l'objet, dans lequel ledit blocage comprend facultativement le positionnement d'un masque devant l'objet et, facultativement, dans lequel le masque est positionné dans la profondeur de foyer.

$G$

$p$

$$D= \quad 0 \quad \frac{p^2}{4\lambda} \quad \frac{p^2}{2\lambda} \quad \frac{p^2}{\lambda} \quad \frac{2p^2}{\lambda} = D_T$$

FIGURE 1A

Beam "waist"
or "DOF" range

$G$

$p$

$$D = 0 \qquad \frac{p^2}{4\lambda} \quad \frac{p^2}{2\lambda} \qquad \frac{p^2}{\lambda} \qquad\qquad \frac{2p^2}{\lambda} = D_T$$

FIGURE 1B

FIGURE 2A

FIGURE 2B

FIGURE 2C

FIGURE 2D

FIGURE 3A

EP 3 610 247 B1

1000

800

800

800

800

1002    1004    1006

## FIGURE 3B

1000

800

800

800

800

1002    1004

## FIGURE 3C

FIGURE 3D

FIGURE 3E

FIGURE 3F

## FIGURE 4A

## FIGURE 4B

FIGURE 5

FIGURE 6A

FIGURE 6B

FIGURE 7

FIGURE 8

FIGURE 9

FIGURE 10A

FIGURE 10B

FIGURE 11

FIGURE 12

Generate x-ray microbeams using x-ray source and beam-splitting grating

4210

Apply filtering to the x-ray microbeams between the x-ray source and the beam-splitting grating

4220

Align sample at Talbot distance

4230

Align detector within waist of microbeam

4240

Record, by detector, x-rays transmitted by each micro-beam

4250

## FIGURE 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62485916
- US 71291715
- US 70013715
- US 52752314
- US 61898019
- US 61901361 B
- US 61981098 B
- US 62429587
- US 1222016
- US 62429760 B
- US 1232016 B
- US 2015117599 A1
- WO 2015168473 A1
- US 2015260663 A1